# EUROPEAN PATENT APPLICATION

(11) **EP 4 209 676 A1**
(43) Date of publication of application: **12.07.2023**
(21) Application number: 21863255.2
(22) Date of filing: 13.05.2021
(51) Int. Cl.: F03D 7/04, H02P 9/14

(54) **WIND POWER GENERATION SYSTEM, AND CONTROL METHOD AND DEVICE THEREFOR**

(30) Priority: 03.09.2020 CN 202010917193
(71) Applicant: SHANGHAI ELECTRIC WIND POWER GROUP CO., LTD, Shanghai 200241 (CN)
(72) Inventor: ZHANG, Luhua, Shanghai 200241 (CN); MA, Chengbin, Shanghai 200241 (CN); LIU, Jiaming, Shanghai 200241 (CN); CHEN, Kunming, Shanghai 200241 (CN); YU, Qing, Shanghai 200241 (CN); GE, Haoxiang, Shanghai 200241 (CN); LV, Ting, Shanghai 200241 (CN); WU, Yanjun, Shanghai 200241 (CN)
(74) Representative: Dai, Simin
(86) International application number: PCT/CN2021/093614
(87) International publication number: WO 2022/048185

(57) **Abstract**

Provided are wind power generation system and control method and apparatus thereof, the wind power generation system includes a generator and N sets of power conversion circuits, the generator including N sets of windings electrically connected to the N sets of power conversion circuits, respectively, N is a positive integer not less than 2. The control method includes: obtaining operating power of the generator; controlling cutting in of the windings based on the current operating power of the generator, where, in response to determining that the current operating power of the generator is lower than rated power of single set of the winding, controlling one set of the N sets of windings to cut in; and in response to determining that the current operating power of the generator is higher than the rated power of single set of the winding, controlling at least two sets of the N sets of windings to cut in. By optimizing the cutting in and cutting out of the windings, aging of the components can be slowed down and overall lifetime can be extended, which can effectively improve overall conversion efficiency, reduce grid-connected current harmonics and improve power quality.

## Description

### TECHNICAL FIELD

The present disclosure relates to wind power generation fields, and in particular to wind power generation systems and control methods and apparatuses thereof.

### BACKGROUND

With development of wind power generation technologies, wind power generation systems have gradually developed into a current parallel operation control method of dual PWM (Pulse width modulation) back-to-back system. Systems with this method have stable operation and high circuit reliability, and are effectively used in wind power generation systems.

Currently, a wind power generation system includes multiple power conversion circuits. During a period of grid-connected power generation, the load will be evenly distributed to each set of windings of a generator. At this time, converters connected with each set of windings of the generator are in a working state, which may accelerate aging of components and affect electrical lifetime of the components. Moreover, when the load is small, each of the converters is operating in a low power state, and THDi (Total Harmonic Current Distortion) of grid-connected current is large, which makes overall efficiency of the generator and converters low and affects power generation and power quality.

### SUMMARY

The present disclosure provides an improved wind power generation system and a control method and apparatus thereof.

Embodiments of the present disclosure provide a control method of a wind power generation system, including a generator and N sets of power conversion circuits, the generator including N sets of windings electrically connected to the N sets of power conversion circuits, respectively, and N being a positive integer not less than 2, and the control method including: obtaining operating power of the generator; and controlling cutting in of the windings based on current operating power of the generator, where, in response to determining that the current operating power of the generator is lower than rated power of single set of the windings, controlling one of the N sets of windings to cut in; and in response to determining that the current operating power of the generator is higher than the rated power of single set of the windings, controlling at least two sets of the N sets of windings to cut in.

Optionally, in response to determining that the current operating power of the generator is higher than the rated power of single set of the windings, controlling the at least two sets of the N sets of windings to cut in includes: determining whether the current operating power of the generator is higher than a sum of rated power of n sets of the windings and lower than a sum of rated power of (n+1) sets of the windings; and in response to determining yes, controlling (n+1) sets of the windings to cut in, where n sets of the (n+1) sets of the windings are controlled to output full-load power, one remaining set of the (n+1) sets of the windings is controlled to output first remaining power, and the first remaining power is difference between the current operating power of the generator and n times the full-load power, where n is greater than 1 and less than N.

Optionally, in response to determining that the current operating power of the generator is higher than the rated power of single set of the windings, controlling the at least two sets of the N sets of windings to cut in includes: in response to determining that the current operating power of the generator is increased by rated power of at least one set of the windings, controlling at least one set of the windings to cut in; and in response to determining that the current operating power of the generator is reduced by the rated power of at least one set of the windings, controlling at least one set of the windings to cut out.

Optionally, an order of the windings to cut out is identical to an order of the windings to cut in.

Optionally, the N sets of windings includes k sets of windings in a standby state, and where controlling the at least one set of the windings to cut in includes: controlling the cutting in of one or more sets of the windings based on standby time of each of the k sets of windings, where, in response to determining that standby time of a k-th set of winding is longer than standby time of a (k-1)-th set of winding, controlling the k-th set of winding to cut in before the (k-1)-th set of winding, where k is greater than 1 and less than N.

Optionally, the power conversion circuit includes a generator-side switch, a generator-side converter, a grid-side converter and a grid-side switch, the generator-side switch is electrically connected between the generator-side converter and the generator, and the grid-side switch is electrically connected between the grid-side converter and a grid, and where controlling the at least one set of the windings to cut in includes: in turn, controlling the grid-side switch to turn on, controlling the grid-side converter to perform modulation, controlling the generator-side switch to turn on, and controlling the generator-side converter to perform modulation.

Optionally, the N sets of windings includes t sets of windings in an operating state, and where controlling the at least one set of the windings to cut out includes: controlling cutting out of one or more sets of the windings based on operating time of each of the t sets of windings, where, in response to determining that operating time of a t-th set of winding is longer than operating time of a (t-1)-th set of winding, controlling the t-th set of winding to cut out before the (t-1)-th set of winding, where t is greater than 1 and less than N.

Optionally, the power conversion circuit includes a generator-side switch, a generator-side converter, a grid-side converter and a grid-side switch, the generator-side switch is electrically connected between the generator-side converter and the generator, and the grid-side switch is electrically connected between the grid-side converter and a grid, and where controlling the at least one set of the windings to cut out includes: in turn, controlling the generator-side converter to end modulation, controlling the generator-side switch to turn off, controlling the grid-side converter to end modulation, and controlling the grid-side switch to turn off.

Optionally, at least one set of the power conversion circuits includes M power conversion modules electrically connected to a same set of the windings, the M power conversion modules are connected in parallel, and M is a positive integer not less than 2; and the control method further including: controlling cutting in of the power conversion modules based on output power of the winding; where, in response to determining that the output power of the winding is less than rated power of single power conversion module, controlling one of the M power conversion modules to perform modulation and controlling the other power conversion modules to stop the modulation; and in response to determining that the output power of the winding is higher than the rated power of single power conversion module, controlling at least two of the M power conversion modules to perform the modulation and controlling the other power conversion modules to stop the modulation.

Optionally, in response to determining that the output power of the winding is higher than the rated power of single power conversion module, controlling the at least two of the M power conversion modules to perform the modulation includes: determining whether current output power of the winding is higher than a sum of rated power of m power conversion modules and not higher than a sum of rated power of (m+1) power conversion modules, in response to determining yes, controlling (m+1) power conversion modules to perform the modulation, where m power conversion modules of the (m+1) power conversion modules are controlled to output the rated power, and remaining one power conversion module of the (m+1) power conversion modules is controlled to output a second remaining power, and the second remaining power is difference between the current output power of the winding and m times the rated power, where m is greater than 1 and less than M.

Optionally, in response to determining that the output power of the winding is higher than the rated power of single power conversion module, controlling the at least two of the M power conversion modules to perform the modulation includes: in response to determining that the output power of the winding is increased by rated power of at least one power conversion module, controlling at least one power conversion module to cut in and perform the modulation; in response to determining that the output power of the winding is reduced by the rated power of at least one power conversion module, controlling at least one power conversion module to cut out and end the modulation.

Optionally, an order of the power conversion modules to cut out is identical to an order of the power conversion modules to cut in.

Optionally, the M power conversion modules include i power conversion modules in a standby state, and where controlling the at least one power conversion module to cut in includes: controlling the cutting in of one or more power conversion modules based on standby time of each of the i power conversion modules, where, in response to determining that standby time of an i-th power conversion module is longer than standby time of an (i-1)-th power conversion module, controlling the i-th power conversion module to cut in before the (i-1)-th power conversion module, where i is greater than 1 and less than M.

Optionally, the M power conversion modules include j power conversion modules in an operating state, and where controlling the at least one power conversion module to cut out includes: controlling cutting out of one or more power conversion modules based on operating time of each of the j power conversion modules, where in response to determining that operating time of a j-th power conversion module is longer than operating time of a (j-1)-th power conversion module, controlling the j-th power conversion module to cut out before the (j-1)-th power conversion module, where j is greater than 1 and less than M.

The present disclosure also provides a computer readable storage medium having a computer program stored thereon, when the program is executed by a processor, implementing the control method of the wind power generation system described in any of the above.

The present disclosure further provides a control apparatus of a wind power generation system, including one or more processors for implementing the control method of the wind power generation system described in any of the above.

The present disclosure further provides a wind power generation system, including: a generator including N sets of windings, N is a positive integer not less than 2; N sets of power conversion circuits electrically connected to the N sets of windings, respectively; and the control apparatus of the wind power generation system described above, where the control apparatus is electrically connected to the power conversion circuits.

According to technical solutions provided by embodiments of the present disclosure, cutting in of windings is controlled based on current operating power of a generator, and when the current operating power of a generator is lower than rated power of single set of winding, one set of the windings is controlled to cut in, and when it is higher than rated power of single set of winding, at least two sets of the windings are controlled to cut in. Compared with related technologies, cutting in and cutting out of the windings are optimized, which can slow down aging of components and extend overall lifetime, and can effectively improve overall conversion efficiency, reduce grid-connected current harmonics and improve power quality.

### BRIEF DESCRIPTION OF THE DRAWINGS

FIG. 1 is a schematic structural diagram illustrating a wind power generation system of the present disclosure.
FIG. 2 is a schematic circuit diagram of the wind power generation system shown in FIG. 1.
FIG. 3 is a flowchart illustrating an embodiment of a control method of the wind power generation system shown in FIG. 2.
FIG. 4 is a flowchart illustrating an embodiment of step S13 in the control method of the wind power generation system shown in FIG. 3.
FIG. 5 is a flowchart illustrating another embodiment of step S13 in the control method of the wind power generation system shown in FIG. 3.
FIG. 6 is a flowchart illustrating another embodiment of the control method of the wind power generation system shown in FIG. 3.
FIG. 7 is a flowchart illustrating an embodiment of step S21 in the control method of the wind power generation system shown in FIG. 6.
FIG. 8 is a flowchart illustrating another embodiment of step S21 in the control method of the wind power generation system shown in FIG. 6.
FIG. 9 is a schematic diagram illustrating an embodiment of a control apparatus for a power conversion circuit of a wind power generation system of the present disclosure.
FIG. 10 is a schematic diagram illustrating an embodiment of a wind power generation system of the present disclosure.

### DETAILED DESCRIPTION OF THE EMBODIMENTS

Examples of embodiments will be described in detail here, examples of which are illustrated in the accompanying drawings. When the following description relates to the accompanying drawings, unless specified otherwise, the same numerals in different drawings represent the same or similar elements. The implementations described in the following examples of embodiments do not represent all implementations consistent with the present disclosure. On the contrary, they are merely examples of an apparatus and a method consistent with some aspects of the present disclosure as recited in detail in the appended claims.

The terms used in the present disclosure are merely for the purpose of describing specific embodiments, and are not intended to limit this application. Unless otherwise stated, the technical terms or scientific terms used in the present disclosure should have general meanings that are understandable by persons of ordinary skills in the art. The terms "a" or "an" and the like used in the specification and the claims of the present disclosure do not mean a quantity limit, but mean that there is at least one. The terms "multiple" or "a/the plurality of" includes two, which is equivalent to at least two. The terms such as "comprise", "include", or any variant thereof mean that an element or article preceded by "comprise" or "include" encompasses elements or articles and their equivalents listed after "comprise" or "include", do not exclude the existence of other elements or articles. Similar words such as "connect" and "couple" include physical connections, mechanical connections and electrical connections, directly or indirectly. The singular forms such as "a", 'said", "this" and "the" used in the present disclosure and the appended claims are also intended to include multiple, unless the context clearly indicates otherwise. It should also be understood that the term "and/or" used herein includes any and all possible combinations of one or more of the associated listed items.

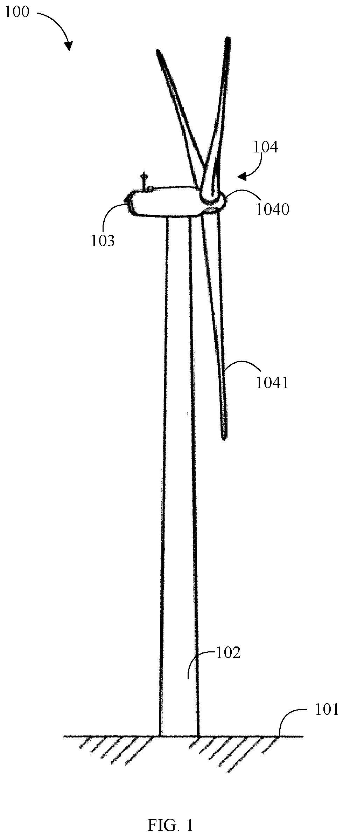

FIG. 1 is a schematic structural diagram illustrating a wind power generation system 100 of the present disclosure. As shown in FIG. 1, the wind power generation system 100 includes a tower 102 extending from a support surface 101, a nacelle 103 mounted on the tower 102, and a rotor 104 assembled to the nacelle 103. The rotor 104 includes a rotatable hub 1040 and at least one rotor blade 1041, and the at least one rotor blade 1041 is connected to the hub 1040 and extends outwardly from the hub 1040. In the embodiment shown in FIG. 1, the rotor 104 includes three rotor blades 1041. In some other embodiments, the rotor 104 may include more or fewer rotor blades. A plurality of rotor blades 1041 may be spaced around the hub 1040 to facilitate rotating the rotor 104 so that wind energy can be converted into usable mechanical energy and subsequently into electrical energy.

In some embodiments, a generator (not shown in the figure) is provided in the nacelle 103, and the generator (not shown in the figure) may be connected to the rotor 104 for generating electrical power from the mechanical energy generated by the rotor 104. In some embodiments, a control apparatus (not shown in the figure) may also be provided in the nacelle 103, and the control apparatus (not shown in the figure) is communicatively coupled to one or more electrical components of the wind power generation system 100 to control operations of such components. In some embodiments, the control apparatus (not shown in the figure) may also be provided within any other device of the wind power generation system 100, or at a location outside of the wind power generation system 100. In some embodiments, the control apparatus (not shown in the figure) may include a computer or other processing unit. In some other embodiments, the control apparatus (not shown in the figure) may include suitable computer readable instructions, and the computer readable instructions, when executed, configure the control apparatus (not shown in the figure) to perform various functions, such as receiving, transmitting, and/or executing one or more control signals for the wind power generation system 100. In some embodiments, the control apparatus (not shown in the figure) may be configured to control various operation modes (e.g., startup or shutdown sequence) of the wind power generation system 100 and/or to control various components of the wind power generation system 100.

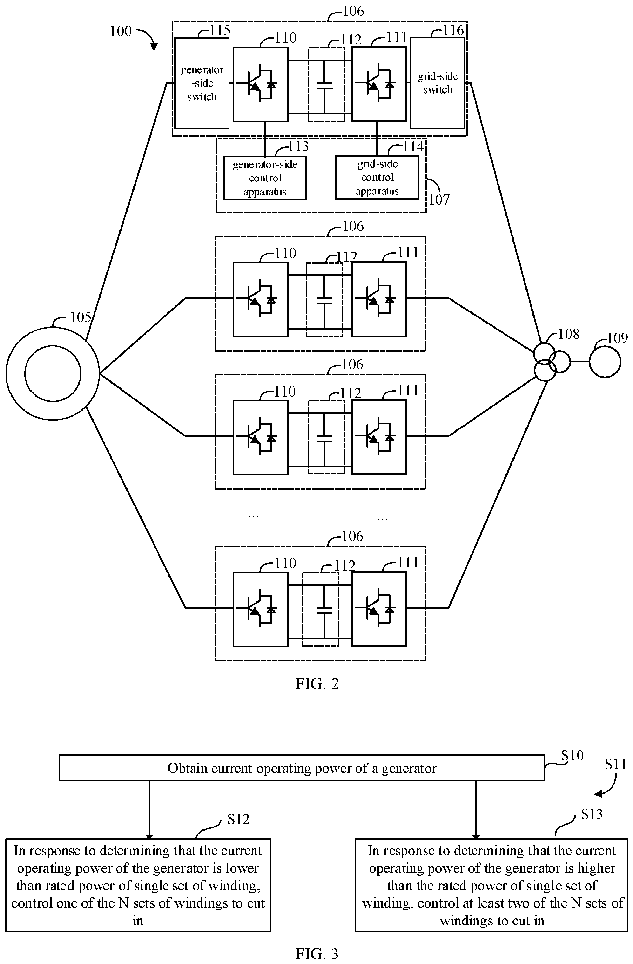

FIG. 2 is a schematic circuit diagram of the wind power generation system 100 shown in FIG. 1. As shown in FIG. 2, the wind power generation system 100 includes a generator 105 and N sets of power conversion circuits 106 connected to the generator 105, N is a positive integer not less than 2. The generator 105 may include an asynchronous generator or a synchronous generator. In some embodiments, a power conversion circuit 106 may receive electrical signals output from the generator 105 and convert the electrical signal to output. The power conversion circuit 106 can convert an Alternating Current (AC) electrical signal to a Direct Current (DC) electrical signal, and then converts the DC electrical signal into AC power of power frequency to output. In this embodiment, the generator 105 includes N sets of windings (not shown in the figure), and the N sets of power conversion circuits 106 are electrically connected to the N sets of windings, respectively, and the N sets of power conversion circuits 106 are for receiving the electrical signals output from the N sets of windings and outputting the electrical signals after conversion.

In some embodiments, the wind power generation system 100 includes a control apparatus 107, which is connected to the power conversion circuits 106 for controlling the power conversion circuits 106 to convert the electrical signals output by the generator 105.

In some embodiments, the wind power generation system 100 includes a transformer 108 connected to the power conversion circuits 106, and the transformer 108 is electrically connected to a power grid 109. Converted electrical signals output from one or more power conversion circuits 106 can be stepped up by the transformer 108 and delivered to the grid 109.

In the embodiment shown in FIG. 2, a power conversion circuit 106 includes a generator-side converter 110 and a grid-side converter 111 and a DC bus 112 connected between the generator-side converter 110 and the grid-side converter 111. The generator-side converter 110 is connected to the generator 105, the grid-side converter 111 is connected to the transformer 108, and the generator-side converter 110 is connected to the grid-side converter 111. In some embodiments, the generator-side converter 110 includes a rectifier and the grid-side converter 111 includes an inverter. An electrical signal output from the generator 105 is an AC electrical signal, and the generator-side converter 110 is for converting the electrical signal output from the generator 105 into a DC electrical signal. The network-side converter 111 is for converting the DC electrical signal into a converted output electrical signal, and outputting the converted output electrical signal to the transformer 108.

The control apparatus 107 may include a generator-side control apparatus 113 and a grid-side control apparatus 114, where the generator-side control apparatus 113 is connected to the generator-side converter 110 for controlling the generator-side converter 110 to convert the electrical signal output from the generator 105 to a DC electrical signal. The grid-side control apparatus 114 is connected to the grid-side converter 111 and for controlling the grid-side converter 111 to convert the DC electrical signal to a converted output electrical signal. The generator-side control apparatus 113 can control voltage and/or power of the DC electrical signal obtained by conversion, and the grid-side control apparatus 114 can control voltage and/or power of the converted output electrical signal obtained by conversion.

The generator-side control apparatus 113 and the grid-side control apparatus 114 may include any suitable programmable circuit or device, such as a Digital Signal Processor (DSP), a Field Programmable Gate Array (FPGA), a Programmable Logic Controller (PLC), an Application Specific Integrated Circuit (ASIC), and so on. The generator-side control apparatus 113 and the grid-side control apparatus 114 can implement control in a combination of software and hardware.

In some embodiments, the generator-side converter 110 includes a plurality of power switch transistors, and the generator-side control apparatus 113 controls switching on/off states of the plurality of power switch transistors to make the generator-side converter 110 perform modulation. In some embodiments, the generator-side control apparatus 113 controls the plurality of power switch transistors to remain off state at the same time, causing the generator-side converter 110 to end modulation. The modulation here refers to that the generator-side converter 110 uses a modulation method, such as SVPWM (Space Vector Pulse Width Modulation) or SPWM (Sinusoidal Pulse Width Modulation) and the like, to control power switch to turn on or off according to a logic set by a program.

In some embodiments, as shown in FIG. 2, the power conversion circuit 106 further includes a generator-side switch 115 electrically connected between the generator-side converter 110 and the generator 105 to control the generator-side converter 110 to be connected or disconnected with the generator 105.

In some embodiments, the grid-side converter 111 includes a plurality of power switch transistors, and the grid-side control apparatus 114 controls a modulation state of the grid-side converter 111 by controlling switching on/off states of the plurality of power switch transistors. In some embodiments, the grid-side control apparatus 114 controls switching on/off states of the plurality of power switch transistors to make the grid-side converter 111 perform modulation. In some embodiments, the grid-side control apparatus 114 controls the plurality of power switch transistors to remain off state at the same time, causing the grid-side converter 111 to end modulation. In some embodiments, the modulation refers to that the grid-side converter 111 uses a modulation method such as SVPWM (Space Vector Pulse Width Modulation) or SPWM (Sinusoidal Pulse Width Modulation) and the like, to control power switch to turn on or off according to a logic set by a program.

In some embodiments, as shown in FIG. 2, the power conversion circuit 106 further includes a grid-side switch 116 electrically connected between the grid-side converter 111 and the grid 109 to control the grid-side converter 111 to be connected or disconnected with the grid 109.

For purposes of illustration in FIG. 2, there are only shown a generator-side control apparatus 113 and a grid-side control apparatus 114 electrically connected to one set of power conversion circuit 106, and other sets of power conversion circuit 106 are also electrically connected with corresponding generator-side control apparatuses and grid-side control apparatuses similar to the generator-side control apparatus 113 and the grid-side control apparatus 114, which are not shown in FIG. 2 and will not be repeated here.

FIG. 3 is a flowchart illustrating an embodiment of a control method of the wind power generation system 100 shown in FIG. 2. As shown in FIG. 3, the control method of the wind power generation system 100 includes steps S10-S11.

At step S10, current operating power of a generator is obtained.

In some embodiments, the current operating power of the generator can be obtained by a control apparatus. In some embodiments, the control apparatus may include any suitable programmable circuit or device, such as a Digital Signal Processor (DSP), a Field Programmable Gate Array (FPGA), a Programmable Logic Controller (Programmable Logic Controller (PLC), an Application Specific Integrated Circuit (ASIC), and so on, which can implement obtaining the current operating power of the generator through a combination of software and hardware.

At step S11, cutting-in of one or more windings is controlled according to the current operating power of the generator.

Further, step S11 includes steps S12-S13. At step S12, in response to determining that the current operating power of the generator is lower than rated power of single set of winding, one of the N sets of windings is controlled to cut in.

In some embodiments, the rated power of single set of winding is *Pₙ*, the obtained current operating power of the generator is P1, the generator has N sets of windings, and there are N sets of power conversion circuits. When the generator is operating at low power, e.g., when the current operating power P1 of the generator is lower than the rated power *Pₙ* of single set of winding, a power conversion circuit electrically connected to a set of winding is controlled to perform modulation to cut in the set of winding, so as to make the generator output power externally through the single set of winding. When the power conversion circuit starts the modulation, both a generator-side switch and a grid-side switch are turned on, causing the winding to cut in, where cutting-in means that the winding supplies power to the outside. Meanwhile, power conversion circuits electrically connected to the rest sets of windings are in a non-operating state, which can slow down aging of some components and extend overall lifetime.

At step S13, in response to determining that the current operating power of the generator is higher than the rated power of single set of winding, at least two of the N sets of windings are controlled to cut in.

In some embodiments, the rated power of single set of winding is *Pₙ,* the obtained current operating power of the generator is P1, the generator has N sets of windings, and there are N sets of power conversion circuits. When the generator is operating at high power, e.g., when the current operating power P1 of the generator is higher than the rated power of single set of winding, and power conversion circuits electrically connected to at least two sets of windings can be controlled to perform modulation according to the current operating power P1, to cut in the at least two sets of windings.

Compared with related technologies, embodiments of the present disclosure optimize the number of windings cut in according to the current operating power of the generator, so that in some cases it is not necessary to cut in all windings, but part of the windings are cut in, which can slow down aging of components such as the windings and extend the overall life. When the generator is in low-power operating conditions, the number of windings cut in is reduced, that is, part of the windings are cut in, which can effectively improve overall conversion efficiency, reduce grid-connected current harmonics and improve power quality.

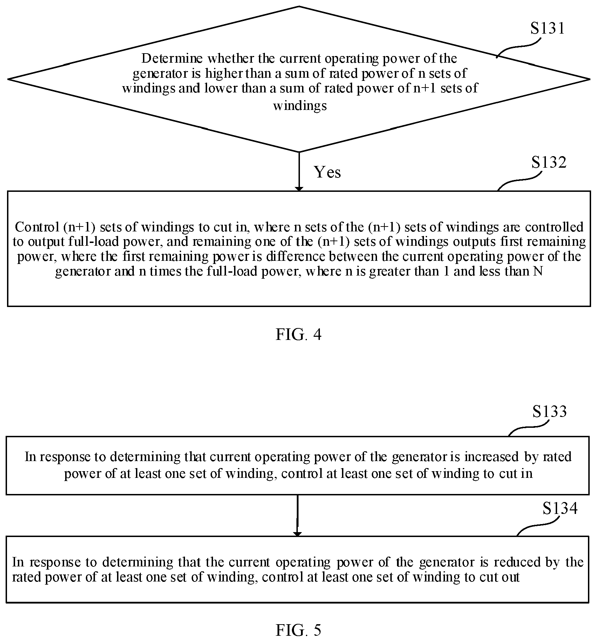

FIG. 4 is a flowchart illustrating an embodiment of step S13 in the control method of the wind power generation system 100 shown in FIG. 3. As shown in FIG. 4, step S13 of the control method of the wind power generation system 100 may include steps S131-S132.

At step S131, whether the current operating power of the generator is higher than a sum of rated power of n sets of windings and lower than a sum of rated power of (n+1) sets of windings is determined.

At step S132, if yes, (n+1) sets of windings are controlled to cut in, where n sets of the (n+1) sets of windings are controlled to output full-load power, and remaining one set of the (n+1) sets of windings outputs first remaining power, where the first remaining power is difference between the current operating power of the generator and n times the full-load power; where n is greater than 1 and less than N.

In some embodiments, the rated power of single set of winding is *Pₙ*, the obtained current operating power of the generator is P1, the generator has N sets of windings, and there are N sets of power conversion circuits. In some embodiments, when the current operating power of the generator is *Pₙ* ≤*P*1 < 2*Pₙ,* power conversion circuits electrically connected to two sets of windings are controlled to perform modulation to make the two sets of windings cut in, where one of the two sets of windings is maintained to output the full-load power, and remaining one set of winding outputs remaining power. In some embodiments, when the current operating power of the generator is 2*Pₙ* ≤ *P*1 < 3*Pₙ*, the power conversion circuits electrically connected to three sets of windings are controlled to perform modulation to make the three sets of windings cut in, where two of the three sets of windings are maintained to output the full-load power, and remaining one set of winding outputs remaining power. By analogy, when the current operating power of the generator is *nPₙ* ≤ *P*1 < (*n*+1)*Pₙ*, (n+1) sets of windings are controlled to cut in, where n sets of windings in the (n+1) sets are controlled to output the full-load power, and remaining one set of winding in the (n+1) sets outputs remaining power, and the remaining power is difference between the current operating power of the generator and n times the full-load power. Further, when the current operating power of the generator is *P*1 =(*n*+1) *Pₙ*, the (n+1) sets of windings are controlled to output the full-load power. Compared with related technologies, embodiments of the present disclosure optimize the number of windings cut in according to the current operating power of the generator, so that in some cases it is not necessary to cut in all windings, but part of the windings are cut in, which can slow down aging of components such as the windings and extend the overall life. When the generator is in low-power operating conditions, the number of windings cut in is reduced, and part of the windings are cut in, which can effectively improve overall conversion efficiency, reduce grid-connected current harmonics and improve power quality.

FIG. 5 is a flowchart illustrating another embodiment of step S13 in the control method of the wind power generation system 100 shown in FIG. 3. As shown in FIG. 5, step S13 of the control method of the wind power generation system 100 may further include steps S133-S134.

At step S133, in response to determining that current operating power of the generator is increased by rated power of at least one set of winding, at least one set of winding is controlled to cut in.

In some embodiments, when the current operating power of the generator is increased, cutting-in of one or more sets of windings can be controlled according to an increase amount of the current operating power. When the increase amount of current operating power of the generator is greater than or equal to rated power of one set of winding, at least one set of winding is controlled to cut in. In some embodiments, the rated power of single set of winding is *Pₙ,* and the obtained current operating power of the generator is P1. When the increase amount of the current operating power P1 of the generator is equal to the rated power *Pₙ* of single set of winding, one of the windings is controlled to cut in. In some embodiments, when the increase amount of the current operating power P1 of the generator is greater than the rated power *Pₙ* of single set of winding, at least two sets of windings are controlled to cut in. Thus, the number of windings cut in is optimized according to the current operating power of the generator and the operating efficiency is improved.

Further, for a cutting-in process of the windings, a cutting-in order of the windings can be controlled according to standby time of the windings in a standby state. The standby state here refers to a state in which a winding is cut out and is in a non-operating state, and the standby time here refers to a sum of time that the winding is in the standby state during a certain operating cycle of a wind turbine. The operating cycle can be a whole operating process or a preset operating cycle. For example, N sets of windings may include k sets of windings that are in the standby state, according to the standby time of each of the k sets of windings, the cutting-in of the windings is controlled. If the standby time of the k-th set of winding is longer than the standby time of the (k-1)-th set of winding, the k-th set of winding is controlled to cut in before the (k-1)-th set of winding, where k is greater than 1 and less than N. In some embodiments, if the increase amount of the current operating power of the generator is greater than the rated power of one set of winding, when a winding that is in the standby state is to be cut in, priority is given to cutting in the winding with long standby time. For example, N sets of windings include k sets of windings that are in the standby state, where the standby time of the 1st set to the k-th set of windings decreases in order, in other words, the standby time of the 1st set of winding is longer than the standby time of the 2nd set of winding, and so on. Among the 1st set to the k-th set of windings, the 1st set of winding has relatively long standby time, thus, priority is given to cut in the 1st set of winding with longer standby time. Priority is given to cut in the winding with long standby time, so that each set of the windings can work evenly and the lifetime of each set of the windings can be extended. In this process, a timing sequence of controlling a winding to cut in includes: in turn, controlling a grid-side switch to turn on, controlling a grid-side converter to perform modulation, controlling a generator-side switch to turn on, and controlling a generator-side converter to perform modulation. For example, when a winding is to be cut in, a DC bus is first pre-charged, then a grid-side switch is turned on, followed by control of a grid-side converter for modulation, then a generator-side switch is turned on, followed by control of a generator-side converter for modulation, so as to increase output power.

At step S 134, in response to determining that the current operating power of the generator is reduced by the rated power of at least one set of winding, at least one set of winding is controlled to cut out.

In some embodiments, when the current operating power of the generator is reduced, cutting-out of one or more sets of windings can be controlled according to a reduction amount of the current operating power. When the reduction amount of current operating power of the generator is greater than or equal to the rated power of one set of winding, at least one set of winding is controlled to cut out. In some embodiments, the rated power of single set of winding is *Pₙ,* the obtained current operating power of the generator is P1. When the reduction amount of the current operating power P1 of the generator is equal to the rated power *Pₙ* of single set of winding, one of the windings is controlled to cut out. In some embodiments, when the reduction amount of the current operating power P1 of the generator is greater than the rated power of single set of winding, at least two sets of windings are controlled to cut out.

In some embodiments, a cutting-out order of the windings is identical to a cutting-in order of the windings. When the current operating power of the generator is increased, a plurality of windings are cut in sequentially, with a winding that is cut in first having its power increased first and outputting full-load power first, and a winding that is cut in last outputting remaining power. When the current operating power of the generator is reduced, the winding that is cut in first reduces its power first and is cut out first, thus evening out running time of the windings and improving overall lifetime.

In other embodiments, for a cutting out process of the windings, a cutting out order of the windings can be controlled according to operating time of the windings in an operating state. The operating state refers to a state in which a winding is cut in to be in operation, and the operating time refers to a sum of time that the winding is in the operating state during a certain operating cycle. The operating cycle can be a whole operating process or a preset operating cycle. For example, N sets of windings include t sets of windings that are in the operating state, according to the operating time of each of the t sets of windings, the cutting-out of the windings is controlled. If the operating time of the t-th set of winding is longer than the operating time of the (t-1)-th set of winding, the t-th set of winding is controlled to cut out before the (t-1)-th set of winding, where t is greater than 1 and less than N. In some embodiments, if the reduction amount of the current operating power of the generator is greater than the rated power of one set of winding, when a winding that is in the operating state is to be cut out, priority is given to cutting out the winding with long operating time. For example, N sets of windings include t sets of windings that are in the operating state, where the operating time of the 1st set to the t-th set of windings decreases in order, that is, the operating time of the 1st set of winding is longer than the operating time of the 2nd set of winding, and so on. Among the 1st set to the t-th set of windings, the 1st set of winding has relatively long operating time, thus, priority is given to cut out the 1st set of winding with longer operating time. Priority is given to cutting out the winding with long operation time, which can slow down aging of each set of windings and other components, thus making a plurality of sets of windings work evenly and improving overall lifetime.

In some embodiments, for the windings in the operating state, in order to alleviate being in the operating state all the time, the operating time is to be considered, and when a winding is to be cut out, the winding with longer operating time will be cut out first, which can alleviate a problem as short overall lifetime of the generator due to rapid aging of some windings and other components, and so extend the overall lifetime. In some embodiments, for the windings in the standby state, in order to alleviate being in the standby state all the time, the standby time is to be considered, and when a winding is to be cut in, the winding with relatively long standby time will be cut in first, which alleviates a situation where part of the windings are always in the operating state and another part of the windings are always in the standby state, thus making the plurality of sets of windings work evenly and improving the overall lifetime. In this process, a timing sequence of controlling a winding to cut out includes: in turn, controlling the generator-side converter to end the modulation, controlling the generator-side switch to turn off, controlling the grid-side converter to end the modulation, and controlling the grid-side switch to turn off. For example, when a winding is to be cut out, the generator-side converter is first controlled to stop the modulation, followed by turning off the generator-side switch, and then the grid-side converter is controlled to stop the modulation, followed by turning off the grid-side switch, so as to reduce the output power.

In some embodiments, the rated power of single set of winding is *Pₙ*, the obtained current operating power of the generator is P1, the generator has N sets of windings, there are N sets of power conversion circuits, and the N sets of windings include the 1st set of winding to the N-th set of winding. In some embodiments, the standby time of the 1st set of winding to the N-th set of winding decreases in order. When the current operating power P1 of the generator is lower than the rated power *Pₙ* of single set of winding, since the standby time of the 1st set of winding is the longest, the 1st set of winding is controlled to cut in at this time to make the generator output power externally through the 1st set of winding. When the current operating power P1 of the generator is increased and the increase amount is greater than or equal to the rated power *Pₙ* of single set of winding, priority is given to cutting in the winding with relatively long standby time. For example, when the current operating power P1 of the generator is increased from lower than *Pₙ* to *Pₙ* ≤ P1 < 2*P*ₙ*,* since the standby time of the 2nd winding is relatively long among the 2nd winding to the N-th winding, priority is given to cutting in the 2nd set of winding with relatively long standby time, thus, the 1st set of winding is controlled to generate full-load power at this time, and the 2nd set of winding is controlled to cut in to generate power. Similarly, when the current operating power P1 of the generator is increased to 2*Pₙ* ≤ P1 < 3*Pₙ*, the 1st set of winding and the 2nd set of winding are controlled to generate full-load power, and the 3rd set of winding is controlled to cut in to generate power; by analogy, when the current operating power P1 of the generator is increased to (*N-*1)*Pₙ* ≤ P1 < *NPₙ,* the N-th set of winding is controlled to cut in to generate power; and when the current operating power P1 of the generator is increased to P1 = *NPₙ,* all the windings are controlled to output full-load power.

In some embodiments, the operating time of the 1st set of winding to the N-th set of winding increases sequentially, and when the current operating power P1 of the generator is reduced and the reduction amount is greater than or equal to the rated power *Pₙ* of one set of winding, priority is given to cutting out the winding with relatively long operating time. In some embodiments, when the current operating power P1 of the generator is reduced from P1 = *NPₙ* to (*N-*1)*Pₙ* P1 < *NPₙ*, since the operating time of the N-th set of winding is relatively long among the 1st set of winding to the N-th set of winding, priority is given to reducing power of the N-th set of winding with relatively long operating time. When the current operating power P1 of the generator is reduced to (*N-*2)*Pₙ* ≤P1 <(*N-*1)*Pₙ,* since the operating time of the N-th set of winding is relatively long among the 1st set of winding to the N-th set of winding, priority is given to cutting out the N-th set of winding with relatively long operating time, at which time the N-th set of winding is controlled to cut out, output power of the (N-1)-th set of winding is controlled to be reduced, and remaining one or more sets of winding are controlled to generate full-load power, and so on. Similarly, when the current operating power P1 of the generator is reduced to P1 < *Pₙ* again, all windings except the 1 st set of winding are cut out of power generation at this time. When the current operating power P1 of the generator is increased to *Pₙ* ≤ P1 < 2*Pₙ* again, the 1st set of winding is controlled to generate full-load power and the 2nd set of winding is cut in to generate power at this time. When the current operating power P1 of the generator is increased to P1 = *NPₙ,* each set of the windings output full-load power again at this time. When the current operating power P1 of the generator is reduced to (*N--*1)*Pₙ* ≤ P1 < *NPₙ* again, output power of the N-th set of winding is controlled to be reduced, and the other sets of windings are controlled to generate full-load power. When the current operating power P1 of the generator is reduced to (*N*-2)*Pₙ* ≤ P1 < (*N-*1)*Pₙ,* the N-th set of winding is controlled to cut out the power generation, output power of the (N-1)-th set of winding is controlled to be reduced, remaining one or more sets of windings are controlled to generate full-load power, and so on. When the current operating power P1 of the generator is reduced again and is less than *Pₙ*, the 1st set of winding is controlled to output power externally and the other sets of windings are all controlled to cut out at this time. According to the current operating power of the generator, each set of the windings is controlled to start and stop in turn, which can even out the cutting in and cutting out of each set of the windings. In some cases, priority is given to cutting in one or more windings with relatively long standby time, and in some cases, priority is given to cutting out one or more windings with relatively long operating time, which can slow down the aging of each set of the windings and other components and extend the overall lifetime of the generator.

It should be noted that the above are only examples, when the current operating power P1 of the generator is increased, it is not limited to be reduced only when it is increased to a maximum value of the generator, and when the current operating power P1 of the generator is reduced, it is not limited to be increased only when it is reduced to a minimum value of the generator. Increase and reduction of the current operating power of the generator are determined by the practical operation of the wind turbine. In addition, the cutting in and cutting out of each set of the windings may be smoothly completed, which can make force changes on the generator relatively smooth and reduce vibrations caused by the cutting in and cutting out of the windings. The "smoothly completed" here means that power change of the generator is gradually being increased or reduced, rather than suddenly being increased or reduced, which will not be repeated here.

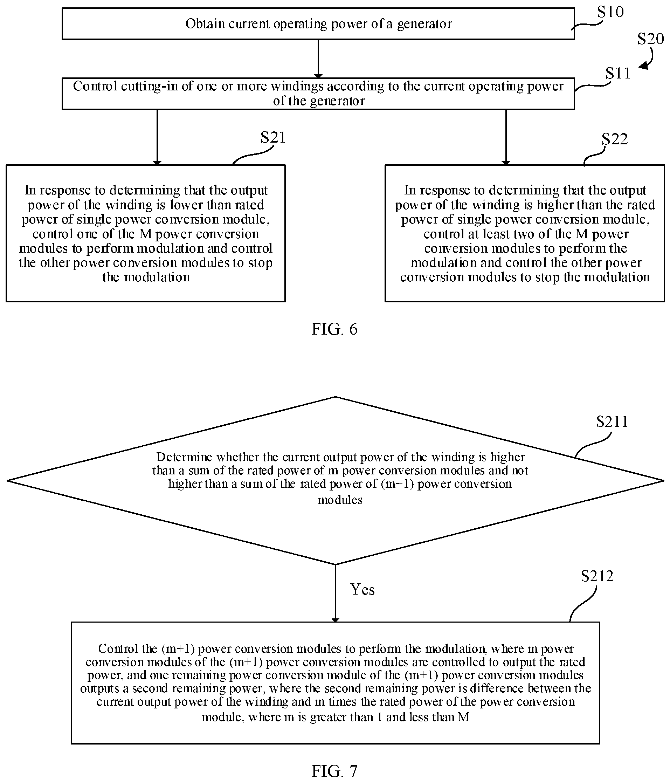

FIG. 6 is a flowchart illustrating another embodiment of the control method of the wind power generation system 100 shown in FIG. 3. In some embodiments, at least one set of power conversion circuit includes M power conversion modules electrically connected to a same set of winding, the M power conversion modules are connected in parallel, and M is a positive integer not less than 2. As shown in FIG. 6, similar to the embodiments of the control method shown in FIG. 3, a control method of the wind power generation system 100 in an embodiment shown in FIG. 6 further includes step S20. The embodiment shown in FIG. 6 is for controlling M power conversion modules of each set of power conversion circuits.

At step S20, one or more power conversion modules are controlled to cut in based on output power of a winding.

Further, step S20 includes steps S21-S22. At step S21, in response to determining that the output power of the winding is lower than rated power of single power conversion module, one of the M power conversion modules is controlled to perform modulation and the other power conversion modules are controlled to stop the modulation.

At step S22, in response to determining that the output power of the winding is higher than the rated power of single power conversion module, at least two of the M power conversion modules are controlled to perform the modulation and the other power conversion modules are controlled to stop the modulation.

In some embodiments, the rated power of single power conversion module is *Pₘ*, obtained current output power of the winding is P2, and there are M power conversion modules. When the current output power P2 of the winding is less than the rated power *Pₘ* of single power conversion module, one of the power conversion modules is controlled to cut in and perform the modulation and the other power conversion module(s) are cut out, where the cutting in means that the power conversion module converts electrical energy output by the winding. The other power conversion modules are in a non-operating state, which slows down aging of the power conversion modules and other components and extends overall lifetime. In some embodiments, when the current output power P2 of the winding is greater than the rated power *Pₘ* of single power conversion module, at least two of the power conversion modules are controlled to cut in and perform the modulation, furthermore, the cutting in and the modulation of each of the power conversion modules are controlled based on obtaining the output power of the winding, which makes a control process more refined and power conversion effect more accurate and facilitates to improve grid-connected power quality.

FIG. 7 is a flowchart illustrating an embodiment of step S21 in the control method of the wind power generation system 100 shown in FIG. 6. As shown in FIG. 7, step S21 of the control method of the wind power generation system 100 includes steps S211-S212.

At step S211, whether the current output power of the winding is higher than a sum of the rated power of m power conversion modules and not higher than a sum of the rated power of (m+1) power conversion modules is determined.

At step S212, if yes, the (m+1) power conversion modules are controlled to perform the modulation, where m power conversion modules of the (m+1) power conversion modules are controlled to output the rated power, and one remaining power conversion module of the (m+1) power conversion modules outputs a second remaining power, where the second remaining power is difference between the current output power of the winding and m times the rated power of the power conversion module, where m is greater than 1 and less than M.

In some embodiments, the rated power of single power conversion module is *Pₘ*, obtained current output power of the winding is P2, and there are M power conversion modules. In some embodiments, when the current output power P2 of the winding is *Pₘ* ≤ P2 < 2*Pₘ*, two power conversion modules are controlled to cut in and perform the modulation, while m-2 power conversion modules are controlled to cut out. Where one of the power conversion modules outputs the rated power, and the one remaining power conversion module outputs remaining power. In some embodiments, when the current output power P2 of the winding is increased to 2*P*ₘ ≤P2 < 3*Pₘ*, three power conversion modules are controlled to cut in and perform the modulation, while m-3 power conversion modules are controlled to cut out. Where two of the power conversion modules output the rated power, and the one remaining power conversion module outputs remaining power. By analogy, when the current output power P2 of the winding is increased to *mPₘ* ≤ P2 < (*m*+1)*Pₘ*, (m+1) power conversion modules are controlled to cut in and perform the modulation, and m power conversion modules are controlled to cut out, where the m power conversion modules output the rated power and one remaining power conversion module outputs remaining power. Further, when the current output power P2 of the winding is increased to ≤ P2 =(*m*+1*)Pₘ,* (m+1) power conversion modules are controlled to cut in and perform the modulation, and all the (m+1) power conversion modules output full-load power at this time. Compared with related technologies, embodiments of the present disclosure optimize a number of power conversion modules cut in according to the current output power of the winding, so that in some cases it is not necessary to cut in all the power conversion modules, but part of the power conversion modules are cut in, which can slow down aging of components such as the power conversion modules and extend overall lifetime. When a winding is in low power operation, finer control of the cutting in of each of the power conversion modules can improve grid-connected power quality and reduce content of harmonics.

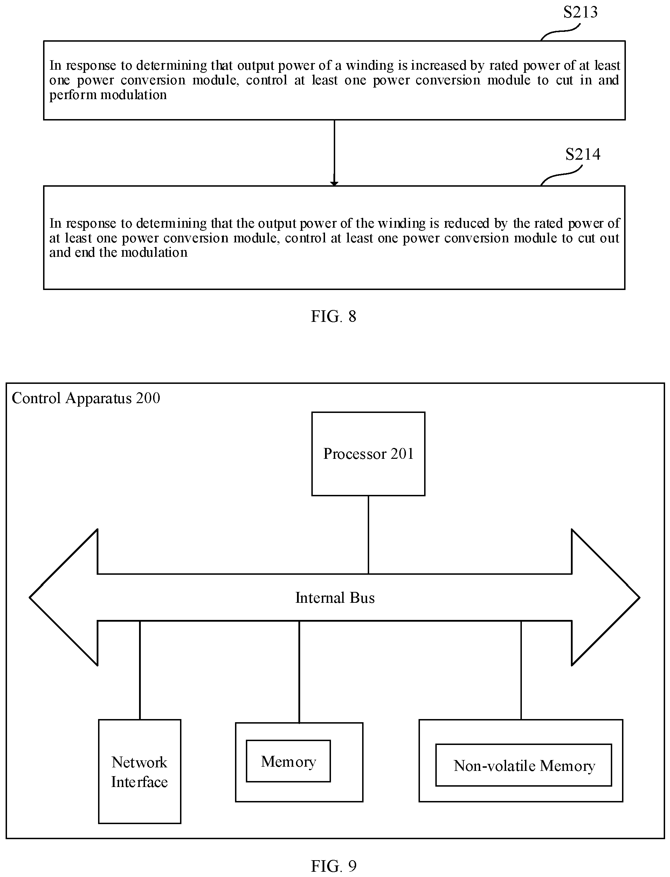

FIG. 8 is a flowchart illustrating another embodiment of step S21 in the control method of the wind power generation system 100 shown in FIG. 6. As shown in FIG. 8, step S21 of the control method of the wind power generation system 100 includes steps S213-S214.

At step S213, in response to determining that output power of a winding is increased by rated power of at least one power conversion module, at least one power conversion module is controlled to cut in and perform modulation.

In some embodiments, when the output power of the winding is increased, the cutting in of one or more power conversion modules can be controlled according to an increase amount of the output power. In some embodiments, when the increase amount of the output power of the winding is greater than or equal to the rated power of one power conversion module, at least one power conversion module is controlled to cut in and perform the modulation. In some embodiments, the rated power of single power conversion module is *Pₘ*, obtained current output power of the winding is P2, and there are M power conversion modules. When the increase amount of the current output power P2 of the winding is equal to the rated power of single power conversion module, one of the power conversion modules is controlled to cut in. In some embodiments, when the increase amount of the current output power P2 of the winding is greater than the rated power of single power conversion module, at least two power conversion modules are controlled to cut in. According to the output power of the winding, the number of the power conversion modules that are cut in is optimized, making conversion efficiency more accurate and power quality better.

Further, for a cutting in process of the power conversion modules, a cutting in order of the power conversion modules can be controlled based on standby time of the power conversion modules in a standby state. The standby state here refers to a state in which a power conversion module is cut out and is in a non-operating state, and the standby time here refers to a sum of time that the power conversion module is in the standby state during a whole operating process. For example, M power conversion modules include i power conversion modules in the standby state, and controlling at least one power conversion module to cut in includes: based on the standby time of each of the i power conversion modules, controlling the power conversion modules to cut in, where if the standby time of the i-th power conversion module is longer than the standby time of the (i-1)-th power conversion module, the i-th power conversion module is controlled to cut in before the (i-1)-th power conversion module, where i is greater than 1 and less than M. In some embodiments, when the increase amount of the output power of the winding is greater than the rated power of one power conversion module, priority is given to cutting in a power conversion module with long standby time when a power conversion module in the standby state is to be cut in. For example, M power conversion modules include i power conversion modules in the standby state, where the standby time of the 1st to the i-th power conversion module decreases in order. In this process, the standby time of the 1 st power conversion module is longer than the standby time of the 2nd power conversion module, by analogy, among the 1st to the i-th power conversion modules, the standby time of the 1st power conversion module is relatively long, thus, priority is given to cutting in the 1st power conversion module with relatively long standby time. Priority is given to cut in the power conversion module with relatively long standby time, so that each of the power conversion modules can work evenly and lifetime of each of the power conversion module can be extended. Compared with related technologies, when the generator is operating at low power, optimizing the cutting in of each of the power conversion modules and controlling each of the power conversion modules more accurately can effectively improve efficiency of power conversion, reduce content of harmonics in a grid, and improve grid-connected power quality.

At step S214, in response to determining that the output power of the winding is reduced by the rated power of at least one power conversion module, at least one power conversion module is controlled to cut out and end the modulation.

In some embodiments, when the output power of the winding is reduced, the cutting out of one or more power conversion modules can be controlled according to a reduction amount of the output power. In some embodiments, when the reduction amount of the output power of the winding is greater than or equal to the rated power of one power conversion module, at least one power conversion module is controlled to cut out and end the modulation. In some embodiments, the rated power of single power conversion module is *Pₘ*, obtained current output power of the winding is P2, and there are M power conversion modules. When the reduction amount of the current output power P2 of the winding is equal to the rated power of single power conversion module, one of the power conversion modules is controlled to cut out and end the modulation. In some embodiments, when the reduction amount of the current output power P2 of the winding is greater than the rated power of single power conversion module, at least two power conversion modules are controlled to cut out.

In some embodiments, a cutting out order of the power conversion module is identical to a cutting in order of the power conversion module. Among the plurality of power conversion modules that cut in sequentially, a power conversion module that cuts in first cuts out first, thus evening out operating time of the power conversion modules and improving overall lifetime.

In other embodiments, for a cutting out process of the power conversion modules, a cutting out order of the power conversion modules can be controlled based on operating time of the power conversion modules in an operating state. The operating state here refers to a state in which a power conversion module is cut in and is working, and the operating time here refers to a sum of time that the power conversion module is in the operating state during a whole operating process of a wind turbine. For example, M power conversion modules include j power conversion modules in the operating state, and controlling at least one power conversion module to cut out includes: based on the operating time of each of the j power conversion modules, controlling the power conversion modules to cut out, where if the operating time of the j-th power conversion module is longer than the operating time of the (j-1)-th power conversion module, the j-th power conversion module is controlled to cut out before the (j-1)-th power conversion module, where j is greater than 1 and less than M. In some embodiments, when the reduction amount of the output power of the winding is greater than the rated power of one power conversion module, priority is given to cutting out a power conversion module with long operating time when a power conversion module in the operating state is to be cut out. For example, M power conversion modules include j power conversion modules in the operating state, where the operating time of the 1st to the j-th power conversion module decreases in order. In this process, the operating time of the 1st power conversion module is longer than the operating time of the 2nd power conversion module, by analogy, among the 1st to the j-th power conversion modules, the operating time of the 1st power conversion module is relatively long, thus, priority is given to cutting out the 1st power conversion module with relatively long operating time. Priority is given to cutting out the power conversion modules with relatively long operating time, which can slow down aging of each of the power conversion modules and other components and extend overall lifetime.

In some embodiments, for the power conversion modules in the operating state, in order to alleviate being in the operating state all the time, the operating time is to be considered. When a power conversion module in the operating state is to be cut out, the power conversion module with long operating time will be cut out first, which can slow down the aging of the power conversion modules and other components and extend the overall lifetime. In some embodiments, for the power conversion modules in the standby state, in order to alleviate being in the standby state all the time, the standby time is to be considered. When a power conversion module in the standby state is to be cut in, the power conversion module with relatively long standby time will be cut in first, which alleviates a situation where part of the power conversion modules are always in the operating state and another part of the power conversion modules are always in the standby state, thus making the plurality of power conversion modules work evenly and improving the overall lifetime.

Further, when the generator is operating at low power, optimizing the cutting in of each of the power conversion modules and controlling each of the power conversion modules more accurately can effectively improve efficiency of power conversion, reduce content of harmonics in a grid, and improve grid-connected power quality.

In some embodiments, a 6 MW permanent magnet synchronous power generation system with dual windings is selected, where the two sets of windings can be referred to as A and B. Both the windings A and B have rated power of 3 MW, and one power conversion circuit includes six power conversion modules with a single power conversion module has rated power of 500 kW. Using the control method provided above, a specific implementation process is as follows.

When the current operating power of the generator is obtained as 2.4MW, since the current operating power of 2.4MW is less than the rated power of 3MW of single set of winding at this time, the winding A is controlled to output power of 2.4MW externally and B is 0. In this way, the winding A is in the operating state and the winding B is in the standby state.

When the current operating power of the generator is obtained to be increased to 3.6MW, since the increased power of 3.6MW exceeds the rated power of 3MW of single set of winding, the power of the winding A in the operating state is controlled to be increased and to output full-load power of 3MW to outside, while the winding B in the standby state is controlled to cut in and output 0.6MW to outside. In this way, both the winding A and the winding B are in the operating state, and the operating time of the winding A is longer than the operating time of the winding B.

When the current operating power of the generator is obtained to be increased to 6MW, the power of the winding B in the operating state is controlled to be increased to the rated power, so that both the winding A and the winding B output full-load power, that is, the winding A outputs full-load power of 3MW to outside and the winding B outputs full-load power of 3MW to outside. In this way, both the winding A and the winding B are in the operating state, and both output full-load power, where the operating time of the winding A is longer than the operating time of the winding B.

When the current operating power of the generator is reduced to 3.6MW, the power of the winding A with longer operating time is controlled to be reduced and to output 0.6MW to outside, at this time, the winding B outputs 3MW to outside at full-load power. In this way, both the winding A and the winding B are in the operating state, and the operating time of the winding A is longer than the operating time of the winding B.

When the current operating power of the generator is reduced to 2.4MW, since the current operating power of 2.4MW is less than the rated power of 3MW of single set of winding, the winding A with longer operating time is controlled to cut out and has 0 external output, at this time, the winding B in the operating state has 2.4MW external output. In this way, the winding B is in the operating state and the winding A is in the standby state.

When the current operating power of the generator is increased to 3.6MW again, the increased power is greater than the rated power of one winding, at this time, the winding A in the standby state is controlled to cut in and output 0.6MW to outside, and the winding B in the operating state outputs full-load power of 3MW to outside. In this way, both the winding A and the winding B are in the operating state, and the operating time of the winding B is longer than the operating time of the winding A.

When the current operating power of the generator is increased to 6MW again, the power of the winding A in the operating state is controlled to be increased to the rated power so as to both the winding A and the winding B are controlled to output full-load power of 3MW externally. In this way, both the winding A and the winding B are in the operating state, and both output full-load power, where the operating time of the winding B is longer than the operating time of the winding A.

When the current operating power of the generator is reduced to 3.6MW, the power of the winding B with longer operating time is controlled to be reduced and to output 0.6MW to outside, at this time, the winding A outputs 3MW to outside at full-load power. In this way, both the winding A and the winding B are in the operating state, and the operating time of the winding B is longer than the operating time of the winding A.

When the current operating power of the generator is reduced to 2.4MW, the winding B, which has longer operating time, is controlled to cut out and to output 0 externally, and at this time, the winding A, which is in the operating state, is controlled to output 2.4MW externally. In this way, the winding A is in the operating state and the winding B is in the standby state.

The above can be understood as a start-stop cycle process of the winding A and the winding B. Further, based on the current operating power of the generator, the cutting in and cutting out of the windings are optimized. In some cases, it is not necessary to cut in all of the windings, but to cut in part of the windings, which can slow down aging of the windings and other components and extend overall lifetime. When the generator is in low-power operating conditions, the number of windings cut in is reduced and some of the windings are cut in, which can effectively improve overall conversion efficiency, reduce harmonics of grid-connected current and improve power quality.

In some embodiments, when a single winding among the winding A and the winding B is cut in and the single winding is not full output, controlling can be performed more accurately according to power conditions, for example, when the power of the winding is 0<P<500kW, a single power conversion module is cut in to generate power; when the power of the winding is 500kW<P<1000kW, two power conversion modules are cut in to generate power; and so on, when the power of the winding is 2500kW<P<3000kW, all six power conversion modules are cut in to generate power.

In some embodiments, when the power of the single set of winding is increased, a cutting in order of the power conversion modules can be controlled according to the standby time. For example, when the power of the winding is increased, priority is given to cutting in a power conversion module with long standby time. In some embodiments, when the power of the single set of winding is reduced, a cutting out order of the power conversion modules can be controlled according to the operating time. For example, when the power of the winding is reduced, priority is given to cutting out the power conversion module with long operating time. Specific processes can be referred to the embodiments shown in FIG. 6 to FIG. 8 above and will not be repeated here.

In embodiments of the present disclosure, the cutting in and cutting out of each of the power conversion modules are controlled based on obtaining the output power of the winding, which makes a control process more refined and power conversion effect more accurate, thus improving grid-connected power quality.

FIG. 9 is a schematic diagram illustrating an embodiment of a control apparatus 200 for a power conversion circuit of a wind power generation system of the present disclosure. In some embodiments, the control apparatus 200 includes one or more processors 201 for implementing the control methods of a wind power generation system in any one of the foregoing wind power generation system's control method embodiments.

The embodiments of the control apparatus 200 of a power conversion circuit for a wind power generation system in the present disclosure can be applied to a wind power generation system. The embodiments of the control apparatus 200 can be implemented by software, or by hardware, or a combination of software and hardware. Taking software implementation as an example, the apparatus, as a logical apparatus, is formed by reading a corresponding computer program instruction in a nonvolatile memory into an internal storage for operation by a processor 201 of the wind power generation system where the apparatus is installed. In terms of hardware, as shown in FIG. 9, a hardware structure diagram of the wind power generation system in which the control apparatus 200 of the present disclosure is installed is shown. In addition to the processor 201, memory, network interface, and nonvolatile memory shown in FIG. 9, the wind power generation system in the embodiments, in which the apparatus is installed, may also include other hardware depending on the practical function of the wind power generation system, which will not be repeated.

In some embodiments, the processor 201 may be a Central Processing Unit (CPU), and may also be other general-purpose processors, Digital Signal Processor (DSP), Application Specific Integrated Circuit (ASIC), Field-Programmable Gate Array (FPGA) or other programmable logic device, discrete gate or transistor logic device, discrete hardware component, and so on. The general-purpose processor may be a microprocessor or the processor 201 may be any conventional processor, and so on. And it will not be repeated here.

In some embodiments, the control apparatus 200 shown in FIG. 9 can refer to the control apparatus 107 shown in FIG. 2 above and will not be repeated here.

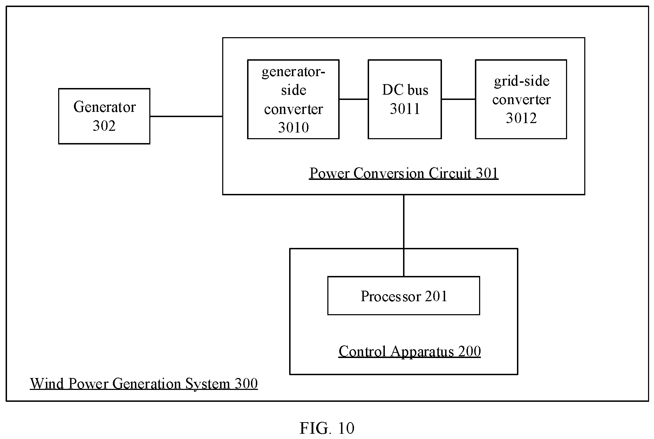

FIG. 10 is a schematic diagram illustrating an embodiment of a wind power generation system 300 of the present disclosure. As shown in FIG. 10, the wind power generation system 300 includes a power conversion circuit 301, a generator 302, and the control apparatus 200 of the wind power generation system shown in FIG. 9 above.

In some embodiments, the power conversion circuit 301 is connected to the generator 302 for converting electrical energy output from the generator 302, the power conversion circuit 301 includes a generator-side converter 3010, a DC bus 3011, and a grid-side converter 3012, the generator-side converter 3010 is electrically connected to the generator 302, the DC bus 3011 is electrically connected to the generator-side converter 3010, and the grid-side converter 3012 is electrically connected to the DC bus 3011. In some embodiments, the control apparatus 200 is electrically connected to the generator-side converter 3010.

In some embodiments, the control apparatus 200 includes one or more processors 201 for implementing the control methods of a wind power generation system in any one of the foregoing wind power generation system's control method embodiments.

In some embodiments, the power conversion circuit 301, generator-side converter 110, and grid-side converter 111 shown in FIG. 10 can be referred to the power conversion circuit 106, generator-side converter 110, and grid-side converter 111 shown in FIG. 2 above, and will not be repeated here.

The implementation process of functions and effects of each unit in the above control apparatus is specified in detail in the implementation process of corresponding steps in the above method, and the descriptions thereof are omitted herein.

For the embodiments of the apparatus, since they basically correspond to the embodiments of the method, they may be referred to the partial description of the embodiments of the method. The embodiments of the apparatus are merely illustrative, where units described as separate components may or may not be physically separated, and components displayed as units may or may not be physical units, i.e., may be located a same location, or it may be distributed to multiple network units. Some or all of the modules may be selected according to practical requirements to achieve the objectives of this application. Those of ordinary skill in the art can understand and implement the present disclosure without any creative effort.

The present disclosure also provides a computer readable storage medium having a computer program stored thereon, where when the program is executed by the processor 201, the control method of the wind power generation system described in any of the above embodiments is implemented. In some embodiments, the computer readable storage medium may be an internal storage unit, such as a hard disk or memory, of a wind power generation system described in any of the aforementioned embodiments. The computer readable storage medium may also be an external storage device of the wind power generation system, such as a plug-in hard disk, Smart Media Card (SMC), SD card, flash card (Flash Card), or the like provided on the wind power generation system. Further, computer readable storage media may also include both the internal storage unit and the external storage device of the wind power generation system. The computer readable storage medium is for storing said computer program and other programs and data that are needed for the wind power generation system, and may also be to temporarily store data that has been output or will be output.

The above are only examples of the present application and not intended to limit this application. Any modification, equivalent replacement, improvement, etc. made within the spirit and principle of the present application shall be included in the protection scope of the application.

## Claims

1. A control method of a wind power generation system, comprising a generator and N sets of power conversion circuits, the generator comprising N sets of windings electrically connected to the N sets of power conversion circuits, respectively, and N being a positive integer not less than 2, and the control method comprising:
obtaining operating power of the generator; and
controlling cutting in of the windings based on current operating power of the generator, wherein,
in response to determining that the current operating power of the generator is lower than rated power of single set of the windings, controlling one of the N sets of windings to cut in; and
in response to determining that the current operating power of the generator is higher than the rated power of single set of the windings, controlling at least two sets of the N sets of windings to cut in.

2. The control method according to claim 1, wherein in response to determining that the current operating power of the generator is higher than the rated power of single set of the windings, controlling the at least two sets of the N sets of windings to cut in comprises:
determining whether the current operating power of the generator is higher than a sum of rated power of n sets of the windings and lower than a sum of rated power of (n+1) sets of the windings; and
in response to determining yes, controlling (n+1) sets of the windings to cut in, wherein n sets of the (n+1) sets of the windings are controlled to output full-load power, one remaining set of the (n+1) sets of the windings is controlled to output first remaining power, and the first remaining power is difference between the current operating power of the generator and n times the full-load power,
wherein n is greater than 1 and less than N.

3. The control method according to claim 1, wherein in response to determining that the current operating power of the generator is higher than the rated power of single set of the windings, controlling the at least two sets of the N sets of windings to cut in comprises:
in response to determining that the current operating power of the generator is increased by rated power of at least one set of the windings, controlling at least one set of the windings to cut in; and
in response to determining that the current operating power of the generator is reduced by the rated power of at least one set of the windings, controlling at least one set of the windings to cut out.

4. The control method according to claim 3, wherein an order of the windings to cut out is identical to an order of the windings to cut in.

5. The control method according to claim 3, wherein the N sets of windings comprises k sets of windings in a standby state, and wherein controlling the at least one set of the windings to cut in comprises:
controlling the cutting in of one or more sets of the windings based on standby time of each of the k sets of windings, wherein, in response to determining that standby time of a k-th set of winding is longer than standby time of a (k-1)-th set of winding, controlling the k-th set of winding to cut in before the (k-1)-th set of winding,
wherein k is greater than 1 and less than N.

6. The control method according to claim 3, wherein the power conversion circuit comprises a generator-side switch, a generator-side converter, a grid-side converter and a grid-side switch, the generator-side switch is electrically connected between the generator-side converter and the generator, and the grid-side switch is electrically connected between the grid-side converter and a grid, and wherein controlling the at least one set of the windings to cut in comprises: in turn, controlling the grid-side switch to turn on, controlling the grid-side converter to perform modulation, controlling the generator-side switch to turn on, and controlling the generator-side converter to perform modulation.

7. The control method according to claim 3, wherein the N sets of windings comprises t sets of windings in an operating state, and wherein controlling the at least one set of the windings to cut out comprises:
controlling cutting out of one or more sets of the windings based on operating time of each of the t sets of windings, wherein, in response to determining that operating time of a t-th set of winding is longer than operating time of a (t-1)-th set of winding, controlling the t-th set of winding to cut out before the (t-1)-th set of winding,
wherein t is greater than 1 and less than N.

8. The control method according to claim 3, wherein the power conversion circuit comprises a generator-side switch, a generator-side converter, a grid-side converter and a grid-side switch, the generator-side switch is electrically connected between the generator-side converter and the generator, and the grid-side switch is electrically connected between the grid-side converter and a grid, and wherein controlling the at least one set of the windings to cut out comprises: in turn, controlling the generator-side converter to end modulation, controlling the generator-side switch to turn off, controlling the grid-side converter to end modulation, and controlling the grid-side switch to turn off.

9. The control method according to claim 1, wherein at least one set of the power conversion circuits comprises M power conversion modules electrically connected to a same set of the windings, the M power conversion modules are connected in parallel, and M is a positive integer not less than 2; and the control method further comprising:
controlling cutting in of the power conversion modules based on output power of the winding; wherein,
in response to determining that the output power of the winding is less than rated power of single power conversion module, controlling one of the M power conversion modules to perform modulation and controlling the other power conversion modules to stop the modulation; and
in response to determining that the output power of the winding is higher than the rated power of single power conversion module, controlling at least two of the M power conversion modules to perform the modulation and controlling the other power conversion modules to stop the modulation.

10. The control method according to claim 9, wherein in response to determining that the output power of the winding is higher than the rated power of single power conversion module, controlling the at least two of the M power conversion modules to perform the modulation comprises:
determining whether current output power of the winding is higher than a sum of rated power of m power conversion modules and not higher than a sum of rated power of (m+1) power conversion modules,
in response to determining yes, controlling (m+1) power conversion modules to perform the modulation, wherein m power conversion modules of the (m+1) power conversion modules are controlled to output the rated power, and remaining one power conversion module of the (m+1) power conversion modules is controlled to output a second remaining power, and the second remaining power is difference between the current output power of the winding and m times the rated power,
wherein m is greater than 1 and less than M.

11. The control method according to claim 9, wherein in response to determining that the output power of the winding is higher than the rated power of single power conversion module, controlling the at least two of the M power conversion modules to perform the modulation comprises:
in response to determining that the output power of the winding is increased by rated power of at least one power conversion module, controlling at least one power conversion module to cut in and perform the modulation; and
in response to determining that the output power of the winding is reduced by the rated power of at least one power conversion module, controlling at least one power conversion module to cut out and end the modulation.

12. The control method according to claim 11, wherein an order of the power conversion modules to cut out is identical to an order of the power conversion modules to cut in.

13. The control method according to claim 11, wherein the M power conversion modules comprise i power conversion modules in a standby state, and wherein controlling the at least one power conversion module to cut in comprises:
controlling the cutting in of one or more power conversion modules based on standby time of each of the i power conversion modules,
wherein, in response to determining that standby time of an i-th power conversion module is longer than standby time of an (i-1)-th power conversion module, controlling the i-th power conversion module to cut in before the (i-1)-th power conversion module,
wherein i is greater than 1 and less than M.

14. The control method according to claim 11, wherein the M power conversion modules comprise j power conversion modules in an operating state, and wherein controlling the at least one power conversion module to cut out comprises:
controlling cutting out of one or more power conversion modules based on operating time of each of the j power conversion modules, wherein in response to determining that operating time of a j-th power conversion module is longer than operating time of a (j-1)-th power conversion module, controlling the j-th power conversion module to cut out before the (j-1)-th power conversion module,
wherein j is greater than 1 and less than M.

15. A computer readable storage medium having a computer program stored thereon, when the program is executed by a processor, implementing the control method of the wind power generation system according to any one of claims 1 to 14.

16. A control apparatus of a wind power generation system, comprising one or more processors for implementing the control method of the wind power generation system according to any one of claims 1 to 14.

17. A wind power generation system, comprising:
a generator comprising N sets of windings, N is a positive integer not less than 2;
N sets of power conversion circuits electrically connected to the N sets of windings, respectively; and
the control apparatus of the wind power generation system of claim 16, wherein the control apparatus is electrically connected to the power conversion circuits.
